## Europäisches Patentamt
## European Patent Office
## Office européen des brevets

(19)

(11) Veröffentlichungsnummer: **0 121 149**
**B1**

# (12) EUROPÄISCHE PATENTSCHRIFT

(45) Veröffentlichungstag der Patentschrift:
02.09.87

(21) Anmeldenummer: 84102566.1

(22) Anmeldetag: 09.03.84

(51) Int. Cl.⁴: **G 02 F 1/133,** G 09 F 9/35

(54) **Elektrische Kontaktanordnung für Flüssigkristall-Anzeigezellen.**

(30) Priorität: 31.03.83 CH 1792/83

(43) Veröffentlichungstag der Anmeldung:
10.10.84 Patentblatt 84/41

(45) Bekanntmachung des Hinweises auf die Patenterteilung:
02.09.87 Patentblatt 87/36

(84) Benannte Vertragsstaaten:
CH DE FR GB LI

(56) Entgegenhaltungen:
DE-A-2 910 779
DE-A-2 930 506
DE-A-3 023 614
US-A-4 025 162
US-A-4 298 883

(73) Patentinhaber: N.V. Philips' Gloeilampenfabrieken,
Groenewoudseweg 1, NL- 5621 BA Eindhoven (NL)

(72) Erfinder: Streit, Peter, Dr., Haldenstrasse 36, CH-
8967 Widen (CH)

(74) Vertreter: Raap, Adriaan Yde, INTERNATIONAAL
OCTROOIBUREAU B.V. Prof. Holstlaan 6, NL-
5656 AA Eindhoven (NL)

EP 0 121 149 B1

## Beschreibung

Die Erfindung betrifft eine elektrische Kontaktvorrichtung nach dem Oberbegriff des Anspruchs 1.

Eine solche Kontaktvorrichtung ist z. B. bekannt aus DE-A-29 10 779. Die dort beschriebene Kontaktvorrichtung besteht aus Teilfassungen, die einen Bodenteil und Seitenwände enthalten, von deren oberen Enden zwei zueinander parallele Stege (Vorsprünge) ausgehen, die die Anzeigevorrichtung übergreifen. Eine eine einzige Ziffer darstellende Anzeigezelle ist in den derart gebildeten Klemmsitz geschoben. Zwischen Fassungsboden und Anzeigezelle kann sich eine Fluoreszenzplatte befinden. In den Fassungsboden ist eine integrierte elektronische Schaltung eingebettet, die mit aus dem Fassungsboden herausragenden Anschlussbeinchen und mit in den Seitenwänden befindlichen Kontaktbeinchen elektrisch verbunden sind. Die Kontaktbeinchen sind zur Anzeigezelle hin gewölbt und bilden mit über die Stirnseite der Anzeigezelle reichenden Anschlussflächen für die Elektroden einen federnden elektrischen Kontakt. Wenn der Kontakt nicht ausreicht, können die Kontsktbeinchen mit den Anschlussflächen verlötet werden. Für die Darstellung mehrerer Anzeigesymbole ist eine entsprechende Anzahl Teilfassungen durch Schnappverschlüsse verbunden.

Die bekannte Kontaktvorrichtung lässt sich nur sehr schwer auswechseln, auch wenn die Kontaktbeinchen nicht mit den Anschlussflächen verlötet sind. Die zu kontaktierende Anzeigevorrichtung kann nicht in Durchsicht betrieben werden. Ausser einer Fluoreszenzplatte ist eine vernünftige künstliche Beleuchtung kaum möglich. Zudem ist für die Darstellung vieler Anzeigesymbole die Anzahl der Anschlussbeinchen beträchtlich. Grosse Anzeigezellen können mit dieser Kontaktvorrichtung kontaktiert werden.

Es ist Aufgabe der Erfindung, eine elektrische Kontaktvorrichtung für Flüssigkristall-Anzeigezellen zu schaffen, die sowohl für transmissive als auch für reflexive Anzeigen geeignet ist, leicht auswechselbar ist, eine gute elektrische Kontaktierung der Anzeigezelle ermöglicht und auch für beliebig gestaltete Anzeigezellen geeignet ist, wenige externe elektrische Anschlüsse aufweist und platzsparend ausgebildet ist.

Diese Aufgabe wird bei einer gattungsgemässen Kontaktvorrichtung durch die kennzeichnenden Merkmale des Anspruchs 1 gelöst.

Die durch die Erfindung erreichten Vorteile sind im wesentlichen darin zu sehen, dass die elektrische Kontaktvorrichtung durch die Gegenkontakte eine gute und stabile elektrische Verbindung mit der Anzeigezelle darstellt, und trotzdem, z. B. bei einer Fehlfunktion des integrierten Schaltkreises, leicht ausgewechselt werden kann. Da die Kontaktanordnung sich ausserhalb des Anzeige- und Beleuchtungsbereiches befindet, ist sie besonders für Anzeigen geeignet, die in Durchsicht betrieben werden. Zudem ist der sonst beträchtliche Verbindungsaufwand mit Hilftsprints, Teilfassungen und "Chip-on-Glass"-Technologie auf ein Minimum reduziert.

Die Erfindung wird im folgenden anhand in der Zeichnung dargestellten Beispiele näher erläutert. Dabei zeigt:

Fig. 1 eine Flüssigkristall-Anzeigezelle mit einer erfindungsgemässen elektrischen Kontaktvorrichtung;

Fig. 2 eine andere Flüssigkristall-Anzeigezelle mit einer anderen erfindungsgemässen elektrischen Kontaktvorrichtung;

Fig. 3 einen Schnitt der Kontaktvorrichtung gemäss Figur 2 längs der Linie A-A';

Fig. 4 eine Flüssigkristall-Anzeigezelle mit einer anderen erfindungsgemässen elektrischen Kontakvorrichtung;

Fig. 5 einen Schnitt der Kontaktvorrichtung gemäss Fig. 4 längs der Linie B-B', und

Fig. 6 eine Kaskade-Schaltung von zwei integrierten Schaltungen.

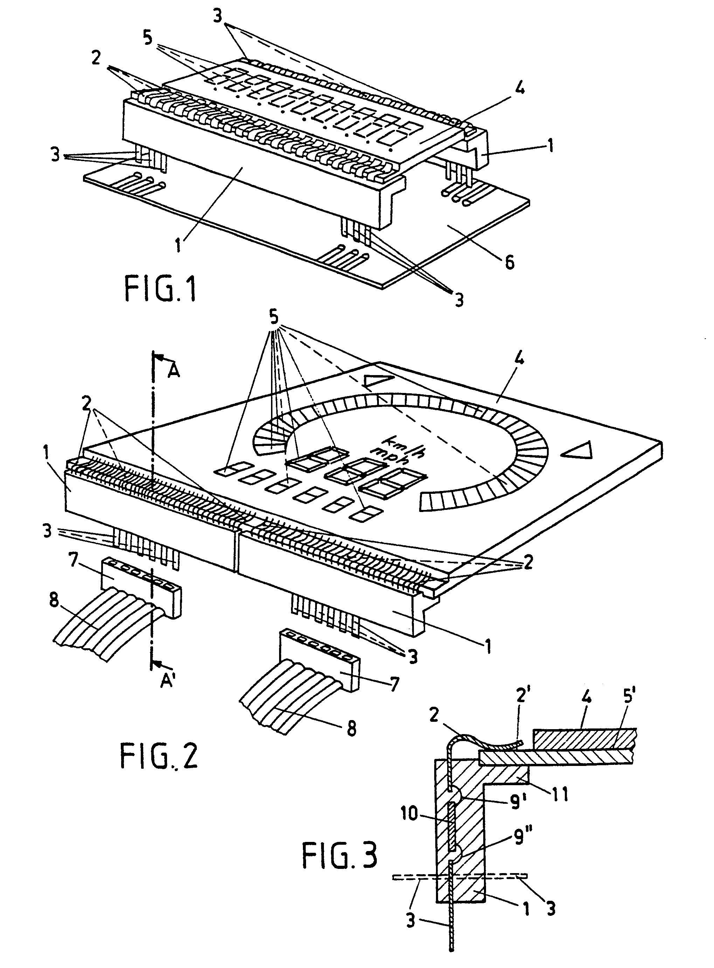

In Fig. 1 sind zwei Beispiele für erfindungsgemässe Kontaktvorrichtungen mit L-förmigen Steckleisten 1 dargestellt. Die in die Steckleiste 1 gefassten Gegenkontakte und externen Anschlüsse werden von Kontaktlaschen 2 und Kontaktstiften 3 gebildet. Die beiden Kontaktvorrichtungen sind seitlich auf eine Flüssigkristall-Anzeigezelle 4 gesteckt, die Elektrodensegmente 5 aus Ziffern und Dezimalpunkten aufweist. Die Kontaktvorrichtung wird auf eine Printplatte 6 durch Verlöten der Kontaktstifte 3 aufgebracht.

In Fig. 2 sind zwei weitere erfindungsgemässe elektrische Kontaktvorrichtungen mit L-förmigen Steckleisten 1 dargestellt. Die Bezeichnung ist dabei gleich wie in Fig. 1. Die beiden Kontaktvorrichtungen sind hier auf dieselbe Seite einer grossflächigen Flüssigkristall-Anzeigezelle 4 gesteckt. Die Zelle bildet eine Tachometer-Anzeige für Autos, und weist Ziffern und andere Anzeigesymbole auf. Die Kontaktstifte 3 sind in der Mitte der Steckleiste 1 angeordnet und werden in einen Stecker 7 hineingesteckt. Der Stecker ist seinerseits über ein Flachbandkabel 8 an eine (nicht dargestellte) Spannungsversorgung und Steuerelektronik angeschlossen.

Fig. 3 bildet einen Schnitt längs der Linie A-A' der Fig. 2. Auf der Anzeigezelle 4 sind den Kontaktlaschen 2 gegenüber Kontaktflächen 2' vorgesehen, die über Leiterbahnen 5' mit den (hier nicht gezeichneten) Elektrodensegmenten 5 verbunden sind. Die Kontaktlaschen 2 und die Kontaktstifte 3 sind über elektrische Leitungen 9', 9'' (Gold- oder Aluminium-Drähte) mit einem in der Steckleiste 1 eingebetteten, integrierten elektronischen Schaltkreis 10 verbunden. Die elektrischen Leitungen 9', 9'' befinden sich ebenfalls innerhalb der Steckleiste 1. Da der integrierte Schaltkreis sich in unmittelbarer Nähe der Gegenkontakte, der Kontaktlaschen 2, befindet, sind die elektrischen Leitungen 9', 9'' sehr kurz. Die elektrischen Verluste und auch der Verbindungsaufwand werden dadurch wesentlich verringert. Am oberen Ende der Steckleiste 1 ist den Kontaktlaschen 2 gegenüber ein Vorsprung 11 vorgesehen, auf dem die Anzeigezelle 4 aufliegt und seitlich durch darin vorgesehene Führungen justiert ist. Wie strichliert dargestellt, können die Kontaktstifte auch seitwärts aus der Kontaktvorrichtung herausragen.

2

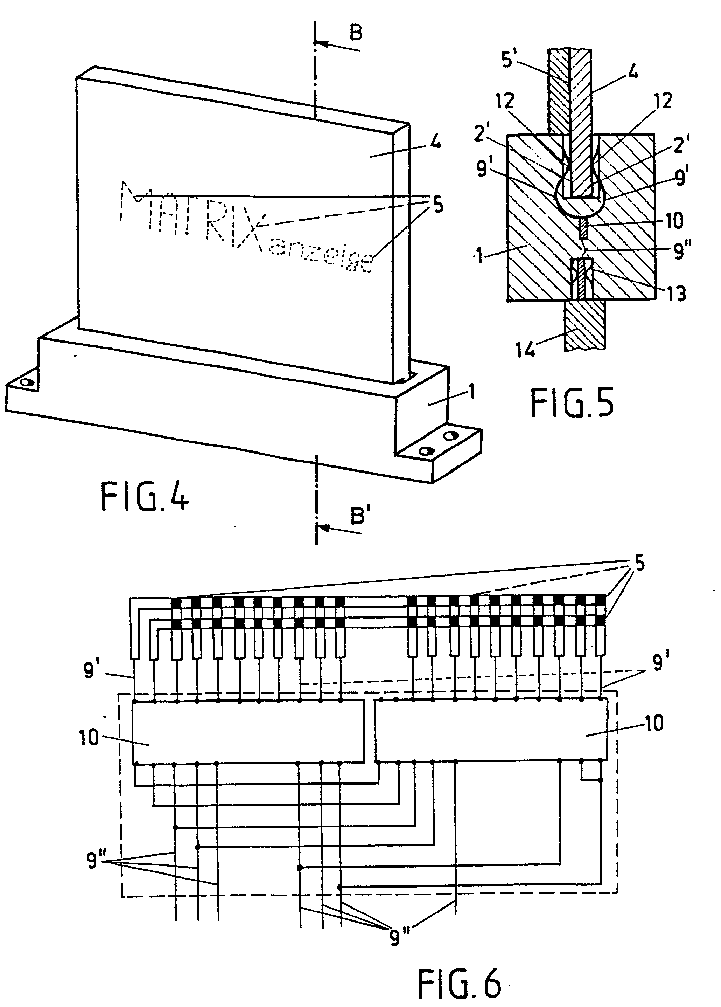

In Fig. 4 ist eine andere Ausführungsform der Erfindung dargestellt. Die Kontaktvorrichtung besteht hier aus einer im wesentlichen quaderförmigen Steckleiste 1 in welche die Flüssigkristall-Anzeigezelle 4, eine Matrixanzeige mit punktförmigen Elektrodensegmenten 5, hineingestecktist.

Fig. 5 ist ein Schnitt längs der Linie B-B' der Fig. 4. Die Steckleiste 1 enthält an ihrer oberen Fläche einen U-förmigen Schlitz, der auf beiden Seiten eine Reihe von Federkontakten 12 (Gegenkontakten) aufweist. Die Enden des Schlitzes sind von der Steckleiste 1 umschlossen, so dass die hineingesteckte Anzeigezelle 4 justiert ist. Die Federkontakte 12 bilden dabei ein regelmässiges Raster. An der unteren Fläche der quaderförmigen Steckleiste 1 ist ebenfalls ein (schmalerer) U-förmiger von der Steckleiste umschlossener Schlitz vorgesehen, in dem eine Reihe von Kontaktbuchsen 13 (externen Anschlüssen) angeordnet sind. Der integrierte Schaltkreis 10 ist wiederum in der Steckleiste 1 eingebettet, und über innerhalb der Steckleiste 1 befindliche elektrische Leitungen 9', 9" mit den Federkontakten 12 und mit den Kontaktbuchsen 13 verbunden. Die Stecker 14, die in die Kontaktbuchsen 13 hineingesteckt sind, befinden sich ihrerseits auch auf einer Steckleiste. Auf der Anzeigezelle 4 sind auf beiden Seiten Kontaktflächen 2' vorgesehen, um die Anzahl der Kontakte zu vergrössern. Die auf der äusseren Seite der Anzeigezelle 4 befindlichen Kontaktflächen 2' sind dabei über die Stirnseite mit den entsprechenden Leiterbahnen 5' verbunden.

Wenn zwei integrierte Schaltkreise 10 in einer Steckleiste 1 vorgesehen sind, ist eine Kaskadierung nach Fig. 6 besonders geeignet. Strichliert ist angedeutet, welcher Teil sich in der Steckleiste 1 befindet. Auf diese Art wird die Anzahl externer Anschlüsse 3 auf ein Minimum reduziert. Die beiden integrierten Schaltkreise 10 bilden ein sogenanntes "Master-Slave"-Verhältnis, bei dem der linke Schaltkreis den "Master", der rechte Schaltkreis den "Slave" ausmacht. Diese Anordnung ist sowohl für Symbol-Anzeigen als auch für Punktmatrix-Anzeigen ausgezeichnet zu verwenden. Die elektrischen Verbindungen zwischen den beiden integrierten Schaltkreisen 10, den Gegenkontakten 2 und den externen Anschlüssen 3 erfolgt kreuzungsfrei oder durch einen doppelseitig mit Metallbahnen beschichteten Film, der ohnehin für die Kontaktierung der integrierten Schaltkreise 10 benötigt wird.

Die üblichen Anzeigezellen haben eine normierte Länge. Für die Anwendung der erfindungsgemässen Kontaktvorrichtung sind die folgenden vier Norm-Längen am geeignetsten:

$$23,9 \; {}^{+\,0,2}_{-\,0,1} \; \text{mm}, \quad 38,0 \; {}^{+\,0,4}_{-\,0,2} \; \text{mm}, \quad 50,7 \; {}^{+\,0,4}_{-\,0,2} \; \text{mm} \; \text{und} \; 69,8 \; {}^{+\,0,4}_{-\,0,2} \; \text{mm}.$$

Die kleinste angegebene Norm-Länge ist aufgrund des üblichen Rasters für die Kontaktlaschen 2 (Fig. 3) oder Federkontakte 12 (Fig. 5) technisch gerade noch realisierbar. Die grösste angegebene Norm-Länge ist aufgrund der Anzahl der Anschlüsse des integrierten Schaltkreises 10 begrenzt. Als Standard-Raster für die Kontaktlaschen 2 oder Federkontakte 12 gibt es die folgenden Möglichkeiten: 2,54 mm (0,1 Zoll), 1,905 mm (0,075 Zoll), 1,27 mm (0,02 Zoll) und 1,00 mm. Das Standard-Raster gibt dabei den Abstand zwischen den Mittellinien zweier benachbarten Kontaktlaschen 2 oder Federkontakte 12 an. Für die als Metallfedern ausgebildeten Kontaktlaschen 2 oder Federkontakte 12 lässt sich das kleinste angegebene Raster von 1,00 mm wegen der Breite der Kontaktlaschen oder Federkontakte nicht weiter verringern.

In der Tabelle 1 sind Beispiele von integrierten Schaltkreisen als Treiber für die Anzeigezellen aufgeführt, die für die erfindungsgemässen Kontaktvorrichtungen besonders geeignet sind. Es sind die Nummer, der Hersteller, die Typenbezeichnung, die Anzahl ansteuerbarer Segmente $Z_{seg}$, die Ansteuerart A, und die Anzahl der Gegenkontakte $Z_{int}$ und der externen Anschlüsse $Z_{ext}$ angegeben.

**Tabelle 1**

| Nr. | Hersteller | Typ | $Z_{seg}$ | A | $Z_{int}$ | $Z_{ext}$ |
|---|---|---|---|---|---|---|
| 1 | Philips | PCE 2100 | 40 | duplex | 22 | 6 |
| 2 | Philips | PCE 2110 | 60 | duplex | 32 | 8 |
| 3 | Philips | PCE 2111 | 64 | duplex | 34 | 6 |
| 4 | Philips | PCE 2112 | 32 | parallel | 33 | 6 |
| 5 | Siemens | SM 804 | 45 | parallel | 46 | 18 |
| 6 | National | MM 5452 | 32 | parallel | 33 | 7 |
| 7 | NEC | uPD 7225 | 32-128 | parallel bis Multiplex 1:4 | 36 | 15 |

In der Tabelle 2 sind die günstigsten Kombinationen von integrierten Schaltkreisen, Länge der Anzeigezelle L in mm, Anzahl der Gegenkontakte $Z_{int}$, Rastermass der Gegenkontakte $R_{int}$ in mm, Segmentzahl $Z_{seg}$ und Ansteuerart A angegeben.

**Tabelle 2**

| Nr. | L | $Z_{int}$ | $R_{int}$ | $Z_{seg} + A$ |
|---|---|---|---|---|
| 1 | 23,9 | 22 | 1,00 | 40 duplex |
| 1 | 50,7 | 20 | 2,54 | 36 duplex |
| 2,3,4,6,7 | 38,0 | 32 bis 36 | 1,00 | 32 parallel bis 128 bei Multiplex 1:4 |
| 2,3,4,6,7 | 50,7 | 32 bis 36 | 1,27 | 32 parallel bis 128 bei Multiplex 1:4 |
| 2,3,4,6,7 | 69,8 | 32 bis 36 | 1,905 | 32 parallel bis 128 bei Multiplex 1:4 |
| 5 | 50,7 | 46 | 1,00 | 45 parallel bis 350 bei Multiplex 1:10 |
| 5 | 69,8 | 46 | 1,27 | 45 parallel bis 350 bei Multiplex 1:10 |

In dem in Fig. 1 beschriebenen Ausführungsbeispiel sind zwei integrierte Schaltkreise des Typs PCE 2100 von Philips verwendet. Die Anzeigezelle 4 ist 51 mm lang und 22 mm breit. Die Anzahl der Kontaktlaschen 2 beträgt 20 auf jeder Seite bei einem Rastermass von 2,54 mm. Die Anzahl der Kontaktstifte 3 beträgt 6 auf jeder Seite, wobei das Rastermass für jede Dreiergruppe 2,54 mm ist. Die Kontaktstifte 3 sind auf der Printplatte 6 verlötet, so dass eine sehr stabile elektrische und mechanische Verbindung mit den Kontaktvorrichtungen und somit auch mit der Anzeigezelle 4 entsteht. Die gesamte Anzahl der angesteuerten Elektrodensegmente 5 beträgt 72.

In dem in Fig. 2 angegebenen Ausführungsbeispiel sind zwei integrierte Schaltkreise des Typs PCE 2111 von Philips verwendet. Die grossflächige Anzeigezelle 4 ist 70 mm lang und 70 mm breit. Die Anzahl der Kontaktlaschen 2 einer Kontaktvorrichtung beträgt 34 bei einem Rastermass von 1,00 mm. Die Anzahl der Kontaktstifte 3 jeder Kontaktvorrichtung beträgt 6 bei einem Rastermass von 2,54 mm, und sind über den Stecker 7 mit dem Flachbandkabel 8 verbunden. Die Anzahl der angesteuerten Elektrodensegmente 5 beträgt in diesem Fall 128. Die Anzeigezelle 4 ist in einem (nicht-gezeichneten) Rahmen gehaltert, um eine gute mechanische Stabilität zu gewährleisten.

Die Herstellung der erfindungsgemässen Kontaktvorrichtungen mit Steckleisten 1 erfolgt ähnlich wie die Fertigung integrierter Schaltungen mit Kunststoff-Gehäusen. Dazu werden aus einer Metallbahn (Kupfer) das Leiterbahnmuster ausgestanzt und auf einen flexiblen Film geklebt. Wenn zwei integrierte Schaltkreise 10 in Kaskade angeordnet sind, wird ein zweites Leiterbahnmuster ausgestanzt und auf die andere Seite des Films geklebt. Der übliche Rand um das Leiterbahnmuster wird dann ausgestanzt und der oder die integrierten Schaltkreise 10 und z. B. die Kontaktlaschen 2 und die Kontaktstifte 3 werden mittels Gold- oder Silberdrähte mit den Leiterbahnen kontaktiert. Das Gehäuse wird dann durch ein entsprechendes Verfahren wie "transfermolding" um dieses Gebilde angebracht, d.h. die zwei Steckleistenhälften werden lokal erwärmt und der flexible Film mit dem integrierten Schaltkreis 10, den Kontaktlaschen 2 und den Kontaktstiften 3 wird zwischen beiden Hälften eingepresst.

Für die Kontaktlaschen 2, die Kontaktstifte 3, die Federkontakte 12 und die Kontaktbuchsen 13 werden vorzugsweise Neusilber, Beryllium oder - was besonders wirtschaftlich ist - Messing gewählt. Die Blechstärke liegt zwischen 0,1 und 0,3 mm, und ist vorzugsweise 0,2 mm. Die äusseren Teile sind von einer Oberflächenverkupferung oder -verzinnung versehen.

Es versteht sich, dass die Gegenkontakte und die externen Anschlüsse von beliebigen Steckersystemen gebildet werden können. Die erfindungsgemässen Kontaktvorrichtungen sind auch besonders günstig für ein modulares Stecksystem anwendbar.

**Patentansprüche**

1. Elektrische Kontaktvorrichtung für eine Flüssigkristall-Anzeigezelle, die mehrere Teilbereiche aufweist, in denen gleichzeitig jeweils ein wählbares Anzeigesymbol anzeigbar ist, das durch angesteuerte Elektrodensegmente festgelegt ist, und die nach aussen zu den entlang einer Kante der Zelle angeordneten Kontaktflächen führende Leiterbahnen aufweist, mit

- mindestens einem in der Kontaktvorrichtung eingebetteten elektronischen integrierten Schaltkreis,
- Gegenkontakten und externen Anschlüssen, die mit dem integrierten Schaltkreis verbunden sind, wobei die elektrischen Leitungen innerhalb der Kontaktvorrichtung verlaufen,

dadurch gekennzeichnet, dass

- die Kontaktvorrichtung im wesentlichen aus einer quaderförmigen Steckleiste besteht, die von der Seite her auf die die Kontaktfläche tragende Kante der Flüssigkristall-Anzeigezelle auf steckbar ist,
- im aufgesteckten Zustand die die Flüssigkristall-Anzeigezelle abdeckenden Flächen der Kontaktvorrichtung höchstens bis an den Anzeige- und Beleuchtungsbereich der Flüssigkristall-Anzeigezelle heranreichen,
- der oder die integrierten Schaltkreise in unmittelbarer Nähe der Gegenkontakte liegen, und

0 121 149

- der oder die integrierten Schaltkreise für jeweils mehrere der Anzeige-Teilbereiche vorgesehen sind.

2. Elektrische Kontaktvorrichtung nach Anspruch 1, dadurch gekennzeichnet, dass die Gegenkontakte von Kontaktlaschen (2) gebildet werden und die Steckleiste (1) einen Vorsprung (11) aufweist, der an der Anzeigezelle derart anliegt, dass die Kontaktflächen (2') der Flüssigkristall-Anzeigezelle (4) und die Kontaktlaschen (2) stets justiert sind.

3. Elektrische Kontaktvorrichtung nach Anspruch 1, dadurch gekennzeichnet, dass die Steckleiste an ihrer in Gebrauchsstellung oberen Fläche einen umschlossenen, U-fürmigen Schlitz enthält, der Reihen von als Federkontakte ausgebildeten Gegenkontakten aufweist.

4. Elektrische Kontaktvorrichtung nach Anspruch 2 oder 3, dadurch gekennzeichnet, dass die externen Anschlüsse von Kontaktstiften gebildet werden.

5. Elektrische Kontaktvorrichtung nach Anspruch 2 oder 3, dadurch gekennzeichnet, dass die Steckleiste an ihrer in Gebrauchsstellung unteren Flache einen umschlossenen, U-förmigen Schlitz enthält, der die als Kontaktbuchsen ausgebildeten, externen Anschlüsse aufweist.

6. Elektrische Kontaktvorrichtung nach einem der vorangegangenen Ansprüche, dadurch gekennzeichnet, dass die Gegenkontakte (2; 12) und die externen Anschlüsse gruppenweise zusammenliegend angeordnet sind, und innerhalb der Gruppe ein regelmässiges Raster bilden.

7. Elektrische Kontaktvorrichtung nach einem der Ansprüche 2 bis 5, dadurch gekennzeichnet, dass die Gegenkontakte und die externen Anschlüsse aus einem federnden Metall mit einer Blechstärke von 0, 1 bis 0,3 mm bestehen.

8. Elektrische Kontaktvorrichtung nach Anspruch 7, dadurch gekennzeichnet, dass das Metall Neusilber, Aluminiumbronce oder Messing ist.

9. Elektrische Kontaktvorrichtung nach Anspruch 8, dadurch gekennzeichnet, dass das Metall auf den äusseren Teilen eine oberflächenbeschichtung aus Kupfer oder Zinn aufweist.


## Claims

1. Electric contact device for a liquid crystal display cell having a plurality of sub-zones in each of which a selectable display symbol determined by driven electrode segments can be simultaneously displayed, and tracks leading outwards to the contact surfaces arranged along one side of the cell, with
- at least one integrated electronic circuit embedded in the contact device,
- counter-contacts and external terminals which are connected to the integrated circuit, the electric lines running within the contact device,
characterised in that
- the contact device essentially consists of a cuboid multi-point connector which can be plugged laterally in to the side of the liquid crystal display cell supporting the contact surface,
- those surfaces of the contact device which cover the liquid crystal display cell extend at most as far as the display and illumination zone of the liquid crystal display cell in the plugged-in condition,
- the integrated circuit or circuits are located in the immediate vicinity of the counter-contacts, and
- the integrated circuit or circuits are in each case provided for several display sub-zones.

2. Electric contact device as claimed in Claim 1, characterised in that the counter-contacts are formed by contact tabs (2) and the multi-point connector (1) has a projection (11) which engages the display cell in such a way that the contact surfaces (2') of the liquid crystal display cell (4) and the contact tabs (2) are always aligned.

3. Electric contact device as claimed in Claim 1, characterised in that the multi-point connector contains, in the operating position on its upper surface, an enclosed U-shaped slot which has rows of counter-contacts formed as spring contacts.

4. Electric contact device as claimed in Claim 2 or 3, characterised in that the external terminals are formed by contact pins.

5. Electric contact device as claimed in Claim 2 or 3, characterised in that the multi-point connector contains, in the operating position on its lower surface, an enclosed U-shaped slot which has the external terminals formed as contact bushes.

6. Electric contact device as claimed in any of the preceding claims, characterised in that the counter-contact (2; 12) and the external terminals are arranged in groups and, within the group, form a regular grid.

7. Electric contact device as claimed in any of Claims 2 to 5, characterised in that the counter-contacts and the external terminals consist of a spring metal having a sheet thickness of 0.1 to 0.3 mm.

8. Electric contact device as claimed in Claim 7, characterised in that the metal is nickel-silver, aluminium bronze or brass.

9. Electric contact device as claimed in Claim 8, characterised in that the metal on the outer parts has a superficial coating of copper or tin.

5

## Revendications

1. Connecteur électrique pour une cellule d'affichage à cristaux liquides présentant plusieurs sous-domaines, dans lesquelles peut être visualisé, simultanément chaque fois un symbole d'affichage à choisir, qui est déterminé par des segments d'électrode excités et qui présente des pistes conductrices s'étendant vers l'extérieur vers les faces de contact disposées suivant un bord de la cellule, comportant
   - au moins un circuit de commutation integré électronique noyé dans le connecteur,
   - des contrefiches et des connexions externes qui sont connectées au circuit de commutation intégré, les conducteurs électriques s'étendant dans le connecteur, caractérisé en ce que
   - le connecteur est essentiellement constitué par une bande à fiches en forme de bloc, qui peut être fichée, à partir du bord sur les bords portant les faces de contact de la cellule d'affichage à cristaux liquides,
   - à l'état fiché, les faces du connecteur recouvrant la cellule d'affichage à cristaux liquides s'étendent au maximum j'usqu'à la gamme d'affichage et d'éclairage de la cellule d'affichage à cristaux liquides,
   - le circuit de commutation intégré ou les circuits de commutation intégré(s) étant disposé(s) dans la proximité immédiate des contrefiches, et
   - le circuit de commutation intégré ou les circuits de commutation intégré(s) étant conçu(s) pour chaque fois plusieurs sous-domaines d'affichage.

2. Connecteur électrique selon la revendication 1, caractérisé en ce que les contrefiches sont constituées par des languettes de contact 2 et la bande à fiches (1) présente une saillie (11) qui s'applique à la cellule d'affichage de façon que les faces de contact (2') de la cellule d'affichage à cristaux liquides (4) et les languettes de contact (2) soient toujours ajustées.

3. Connecteur électrique selon la revendication 1, caractérisé en ce que les faces supérieures, à l'état de fonctionnement, de la bande à fiche sont munies d'une rainure en U enfermée, qui présente une rangée de contrefiches sous forme de contacts élastiques.

4. Connecteur électrique selon la revendication 2 ou 3, caractérisé en ce que les connexions externes sont constituées par des fiches de contact.

5. Connecteur selon la revendication 2 ou 3, caractérisé en ce que la face inférieure, à l'état d'utilisation, de la bande à fiches présente une rainure en U enfermée, qui présente des connexions externes constituées par des douilles de contact,

6. Connecteur électrique selon l'une des revendications précédentes, caractérisé en ce que les contrecontacts (2; 12) et les connexions externes sont disposés par groupe ensemble et constituent une trame régulière dans le groupe.

7. Connecteur électrique selon l'une des revendications 2 à 5, caractérisé en ce que les contrecontacts et les connexions externes sont constitués par un métal métallique présentant une épaisseur de 0,1 à 0,3 mm.

8. Connecteur électrique selon la revendication 7, caractérisé en ce que le métal est de l'argentan, du bronze d'aluminium ou du laiton.

9. Connecteur électrique selon la revendication 8, caractérisé en ce que sur les parties extérieures, le métal présente une couche superficielle en cuivre ou en étain.

0 121 149

FIG.1

FIG.2

FIG.3

1

FIG.4

FIG.5

FIG.6